# EUROPÄISCHE PATENTSCHRIFT

(11) **EP 2 984 365 B1**
(45) Veröffentlichungstag und Bekanntmachung des Hinweises auf die Patenterteilung: **07.06.2017**
(21) Anmeldenummer: 14717140.9
(22) Anmeldetag: 11.04.2014
(51) Int. Cl.: F16F 15/173

(54) **VISKOSITÄTSDREHSCHWINGUNGSDÄMPFER ODER VISKOSITÄTSDREHSCHWINGUNGSTILGER**
ROTARY VISCOUS VIBRATION DAMPER OR ROTARY VISCOUS VIBRATION ABSORBER
DISPOSITIF À EFFET DE VISCOSITÉ PERMETTANT D'AMORTIR OU DE SUPPRIMER DES VIBRATIONS TORSIONNELLES

(30) Priorität: 12.04.2013 DE 102013006751
(43) Veröffentlichungstag der Anmeldung: 17.02.2016
(73) Patentinhaber: Hasse & Wrede GmbH, 12681 Berlin (DE)
(72) Erfinder: KNOPF, Florian, 14199 Berlin (DE)
(74) Vertreter: Specht, Peter
(86) Internationale Anmeldenummer: PCT/EP2014/057437
(87) Internationale Veröffentlichungsnummer: WO 2014/167120

(56) Entgegenhaltungen:
- US-A- 2 824 467
- US-A- 3 398 602

## Beschreibung

Die vorliegende Erfindung betrifft einen Viskositätsdrehschwingungsdämpfer oder Viskositätsdrehschwingungstilger gemäß dem Oberbegriff des Anspruchs 1.

Viskositätsdrehschwingungsdämpfer oder Viskositätsdrehschwingungstilger der gattungsgemäßen Art sind z.B. aus den Dokumenten US 3 398 602 A und US 2 824 467 bekannt. Derartige Dämpfer oder Tilger werden benutzt, um Drehschwingungen an Kurbelwellen von Hubkolbenmotoren zu reduzieren, wobei innerhalb des Gehäuses derartiger Dämpfer oder Tilger Schwungringe oder Schwungmassen gelagert sind. Das Gehäuse weist dabei üblicherweise ein an einer Kurbelwelle eines Motors, insbesondere eines Verbrennungsmotors, befestigbares Nabenteil auf, wobei der Schwungring relativ zu dem Nabenteil drehbar ist, wobei zwischen Nabenteil und Schwungring ein Scherspalt gebildet ist, welcher mit einem flüssigen Schermedium wie z.B. dem oben genannten Silikonöl gefüllt ist. In diesem mit Silikonöl gefüllten Scherspalt dienen Bundbuchsen zur Führung und Lagerung des Schwungringes.

Diese Bundbuchsen werden üblicherweise ohne Vorspannung zwischen den beiden Dämpfergehäusen und dem Schwungring eingefügt, um Gehäuse und Ring mit möglichst kleiner Reibung auf den Bundbuchsen gleiten zu lassen.

Problematisch bei hohen Temperaturen, insbesondere bei Temperaturen oberhalb von 130 °C, die bei Drehschwingungsdämpfern aufgrund der Scherung des Dämpfungsmediums Silikonöl im Fahrbetrieb regelmäßig entstehen, ist, dass es zwischen den herkömmlichen Bundbuchsen, welche in der Regel aus Polyamid hergestellt sind, und dem Silikonöl häufig zu Wechselwirkungen kommt, welche zu einer sehr schnell ablaufenden Degeneration der Viskosität des Silikonöls führen. So wurde bei Versuchen mit einer Viskositätsdrehschwingungsdämpfer - Außentemperatur von 160°C eine Abnahme der Viskosität um 53 % nach Ablauf von ca. 20 Stunden festgestellt. Die Lebensdauer solcher Viskositätsdrehschwingungsdämpfer beträgt in der Regel 20.000 Stunden. Dabei wird in diesem Zeitraum ein Verschleiß von nur 30 % angestrebt.

Zur Lösung dieses Problems könnte einerseits versucht werden, die hohe Betriebstemperatur herabzusetzen, was aber aufgrund von Bauraumbeschränkungen und höheren Spitzendrücken der Motoren nicht wahrscheinlich erscheint, sodass die Viskositätsdrehschwingungsdämpfer tendenziell dazu ausgelegt werden müssen, noch höhere Temperaturen auszuhalten und es daher auch nicht sinnvoll erscheint, die Viskositätsdrehschwingungsdämpfer so auszulegen, dass sie im Betrieb keinen solch hohen Temperaturen ausgesetzt sind.

Aufgabe der vorliegenden Erfindung ist es daher, einen Viskositätsdrehschwingungsdämpfer oder einen Viskositätsdrehschwingungstilger bereit zu stellen, der auch bei Temperaturen oberhalb von 130°C eine ängere Lebensdauer gewährleistet als herkömmliche Viskositätsdrehschwingungsdämpfer oder -tilger.

Diese Aufgabe wird durch einen Viskositätsdrehschwingungsdämpfer oder einen Viskositätsdrehschwingungstilger mit den Merkmalen des Anspruches 1 gelöst.

Der erfindungsgemäße Viskositätsdrehschwingungsdämpfer oder -tilger zeichnet sich dadurch aus, dass die Bundbuchsen aus einem Flüssigkristallpolymer (LCP) bestehen. Es hat sich gezeigt, dass dieses Material auch bei höheren Temperaturen, insbesondere oberhalb von 130 °C, nicht oder nur in vernachlässigbarem Ausmaß mit dem Silikonöl wechselwirkt.

Der Einsatz solcher erfindungsgemäßer Bundbuchsen in einem Viskositätsdrehschwingungsdämpfer oder -tilger ermöglicht eine längere Lebensdauer des Viskositätsdrehschwingungsdämpfers oder -tilgers- gegenüber herkömmlichen Viskositätsdrehschwingungsdämpfer - oder tilgern mit beispielsweise aus Polyamid bestehenden Bundbuchsen.

Ein weiterer Vorteil des erfindungsgemäßen Viskositätsdrehschwingungsdämpfers oder -tilgers besteht darin, dass aufgrund der reduzierten Hitzeempfindlichkeit des Bundbuchsenmaterials bezüglich der Wechselwirkung mit dem Silikonöl höhere Schwingungsdämpfertemperaturen im Vergleich zu den Arbeitstemperaturen von herkömmlichen Viskositätsdrehschwingungsdämpfern oder -tilgern zugelassen werden können, wodurch eine Bauraumreduzierung bzw. Materialeinsparungen, insbesondere durch Wegfall der Lüfterscheiben oder zumindest einer kleineren Dimensionierung der Lüfterscheiben, ermöglicht sind, wobei sämtliche vorgenannten Maßnahmen der Herabsetzung der Schwingungsdämpfertemperatur dienen, um die Degeneration der Viskosität des Silikonöls durch Wechselwirkung mit dem Material der Bundbuchsen herabzusetzen.

Nachfolgend wird ein Ausführungsbeispiel der Erfindung anhand der beigefügten Zeichnungen näher erläutert. Es zeigen:
- Fig. 1: eine perspektivische Teilschnittdarstellung eines erfindungsgemäßen Viskositätsdrehschwingungsdämpfers oder Viskositätsdrehschwingungstilgers;
- Fig. 2: eine Querschnittsdarstellung des Viskositätsdrehschwingungsdämpfers oder Viskositätsdrehschwingungstilgers aus Figur 1; und

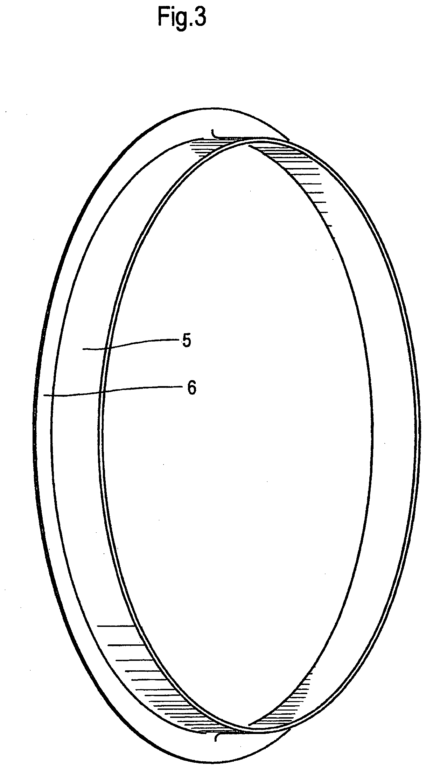

- Fig. 3: eine perspektivische Ansicht einer Ausführungsvariante einer Bundbuchse.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Viskositätsdrehschwingungsdämpfer, Bundbuchse, Schwungring und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

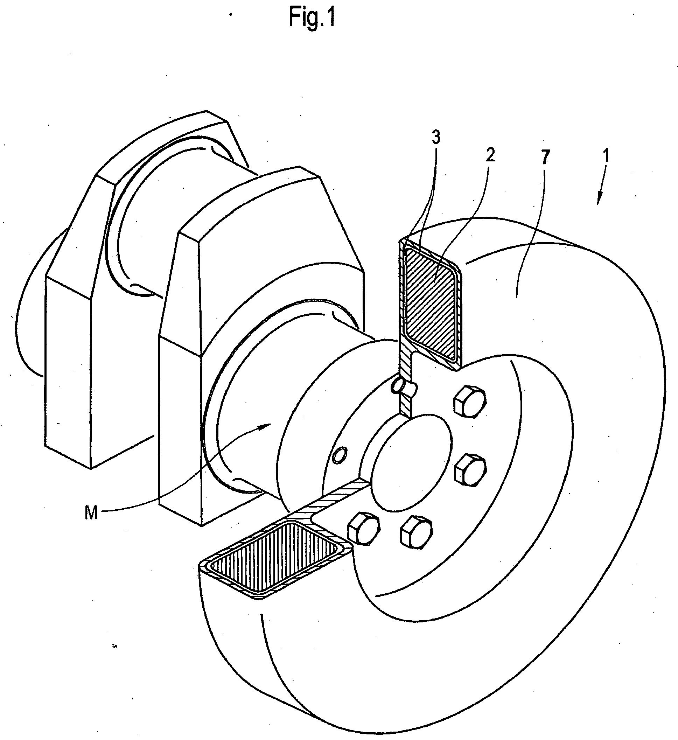

In der Fig. 1 ist mit dem Bezugszeichen 1 insgesamt eine Ausführungsvariante eines erfindungsgemäßen Viskositätsdrehschwingungsdämpfers oder Viskositätsdrehschwingungstilgers bezeichnet. Der Viskositätsdrehschwingungsdämpfer oder -tilger weist dabei im Wesentlichen ein ringförmiges Gehäuse 7 auf, welches mit der Kurbelwelle M eines Motors drehfest verbunden ist. Innerhalb des Gehäuses 7 ist ein Schwungring 2 angeschlossen, der von einer als Dämpfungsmedium dienenden Silikonöl umgeben ist, das zwischen dem Gehäuse 7 und dem Schwungring 2 einen Scherspalt 3 ausfüllt.

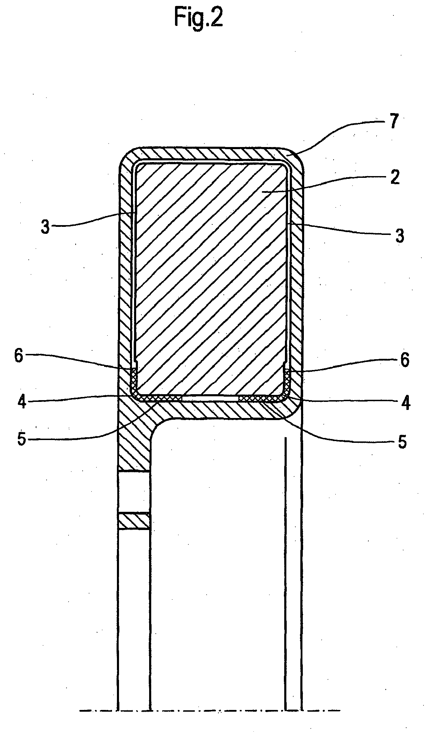

Wie in Fig. 2 gut zu erkennen ist, wird der an dem Gehäuse 7 lose gelagerte Schwungring 2 durch Bundbuchsen 4 mit bevorzugtem L-förmigen Querschnitt, radial und axial in dem Gehäuse geführt. Die Bundbuchsen 4 liegen dabei in einem Scherspalt 3 zwischen dem Schwungring 2 und dem Gehäuse 7, wobei der Scherspalt 3 mit Silikonöl befüllt ist.

Um eine Beschädigung, insbesondere Herabsetzung der Viskosität, des Silikonöls durch Wechselwirkungen mit dem Material, aus dem die Bundbuchsen hergestellt sind, möglichst zu vermeiden, sind die Bundbuchsen aus einem Flüssigkristallpolymer gefertigt. Mit solchen aus einem Flüssigkristallpolymer gefertigten Bundbuchsen 4 ist eine Reduzierung der Viskositätsabnahme des Silikonöls nach 20 Stunden Einwirkung bei 160 °C um lediglich 3,8% erreichbar, was gegenüber einer Viskositätsabnahme des Silikonöls von 53% beim Einsatz von aus Polyamid hergestellten Bundbuchsen, die insbesondere bei Temperaturen oberhalb von 130°C mit dem Silikonöl stark wechselwirken, eine deutliche Verlängerung der Lebensdauer bewirkt.

Der Einsatz solcher aus Flüssigkristallpolymeren hergestellten Bundbuchsen ermöglicht die Einsparung von Materialien, wie beispielsweise Lüfterscheiben, welche bei herkömmlichen Viskositätsdrehschwingungsdämpfern oder -tilgern eine Kühlung des im Betrieb sich aufheizenden Silikonöls herbeiführen, um die Schädigung des Silikonöls mit den im Stand der Technik aus Polyamid hergestellten Bundbuchsen möglichst gering zu halten.

### Bezugszeichenliste

- 1: Viskositätsdrehschwingungsdämpfer oder Viskositätsdrehschwingungstilger
- 2: Schwungring
- 3: Scherspalt
- 4: Bundbuchse
- 7: Gehäuse

- M: Kurbelwelle

## Patentansprüche

1. Viskositätsdrehschwingungsdämpfer oder -tilger (1), aufweisend ein an einer Kurbelwelle (M) eines Motors, insbesondere eines Verbrennungsmotors, befestigbares Nabenteil und einen relativ zum Nabenteil verdrehbar gelagerten Schwungring (2), wobei zwischen dem Nabenteil und dem Schwungring (2) ein mit einem Silikonöl gefüllter Scherspalt (3) ausgebildet ist, in dem Bundbuchsen (4) zur Führung des Schwungringes (2) gelagert sind, **dadurch gekennzeichnet, dass** die Bundbuchsen (4) aus einem Flüssigkristallpolymer bestehen.

2. Viskositätsdrehschwingungsdämpfer oder -tilger (1) nach Anspruch 1, **dadurch gekennzeichnet, dass** die Bundbuchsen (4) einen L-förmigen Querschnitt aufweisen.

## Claims

1. A rotary viscous vibration damper or absorber (1), comprising a hub part fastenable to a crankshaft (M) of an engine, especially an internal combustion engine, and a vibration damper ring (2) mounted so as to be rotated relative to the hub part, wherein between the hub part and the vibration damper ring (2) a shear gap (3) filled with a silicone oil is configured, in which flange bushings (4) for guiding the vibration damper ring (2) are mounted, **characterized in that** the flange bushings (4) are made of a liquid crystal polymer.

2. The rotary viscous vibration damper or absorber (1) according to claim 1, **characterized in that** the flange bushings (4) have an L-shaped cross section.

## Revendications

1. Amortisseur ou suppresseur de vibrations de torsion à fluide visqueux (1), comportant une partie formant moyeu qui peut être fixée sur un vilebrequin (M) d'un moteur, en particulier d'un moteur à combustion interne, et une bague d'inertie (2) montée avec possibilité de rotation par rapport à la partie formant moyeu, une fente de cisaillement (3) remplie d'huile de silicone, dans laquelle sont montées des douilles à collet (4) destinées à guider la bague d'inertie (2), étant formée entre la partie formant moyeu et la bague d'inertie (2), **caractérisé en ce que** les douilles à collet (4) sont constituées d'un polymère à cristaux liquides.

2. Amortisseur ou suppresseur de vibrations de torsion à fluide visqueux (1) selon la revendication 1, **caractérisé en ce que** les douilles à collet (4) présentent une section transversale en L.
